# EUROPEAN PATENT SPECIFICATION

(11) **EP 2 701 158 B1**
(45) Date of publication and mention of the grant of the patent: **04.03.2015**
(21) Application number: 12774058.7
(22) Date of filing: 05.03.2012
(51) Int. Cl.: G21F 9/32, G21C 19/44, G21C 19/48, G21F 9/02

(54) **METHOD FOR REPROCESSING IRRADIATED NUCLEAR FUEL**
VERFAHREN ZUR AUFARBEITUNG VON BESTRAHLTEM KERNBRENNSTOFF
PROCÉDÉ DE RETRAITEMENT DE COMBUSTIBLE NUCLÉAIRE IRRADIÉ

(30) Priority: 20.04.2011 RU 2011115665
(43) Date of publication of application: 26.02.2014
(73) Proprietor: Federal State Unitary Enterprise "Mining and Chemical Combine" (FSUE "MCC"), Zheleznogorsk, Krasnoyarsky Region 662972 (RU)
(72) Inventor: GAVRILOV, Petr Mikhailovich, Zheleznogorsk Krasnoyarsky krai 662971 (RU); KUDRYAVTSEV, Yevgeny Georgievich, Moscow 125480 (RU); REVENKO, Yury Alexandrovich, Zheleznogorsk Krasnoyarsky krai 662971 (RU); MERKULOV, Igor Alexandrovich, Zheleznogorsk Krasnoyarsky krai 662971 (RU); BONDIN, Vladimir Victorovich, Zheleznogorsk Krasnoyarsky krai 662971 (RU); VOLK, Vladimir Ivanovich, Moscow 123098 (RU); BYCHKOV, Sergey Ivanovich, Zheleznogorsk Krasnoyarsky krai 662980 (RU); ALEXEYENKO, Vladimir Nikolaevich, Zheleznogorsk Krasnoyarsky krai 662979 (RU)
(74) Representative: Boult Wade Tennant
(86) International application number: PCT/RU2012/000161
(87) International publication number: WO 2012/144933

(56) References cited:
- RU-C1- 2 303 303
- G D DELCUL ET AL: "ADVANCED HEAD END FOR THE TREATMENT OF USED LWR FUEL", OECD NUCLEAR ENERGY AGENCY; 11 TH INFORMATION EXCHANGE MEETING ON ACTINIDE AND FISSION PRODUCT PARTITIONING AND TRANSMUTATION HYATT AT FISHERMAN'S WHARF, 5 November 2010 (2010-11-05), XP055109017,
- G.D. DelCul et al.: "Nuclear Science and Nuclear Development 2012", , 4 October 2010 (2010-10-04), pages 265-268, XP055109120, Retrieved from the Internet: URL:http://www.iaea.org/inis/collection/NC LCollectionStore/_Public/44/052/44052611.p df [retrieved on 2014-03-20]
- REFEREX, 31 July 2001 (2001-07-31), XP040426044,
- KEE CHAN SONG ET AL: "Fractional Release Behavior of Volatile and Semivolatile Fission Products During a Voloxidation and OREOX Treatment of Spent PWR Fuel", NUCLEAR TECHNOLOGY, AMERICAN NUCLEAR SOCIETY, CHICAGO, IL, US, vol. 162, no. 2, 1 May 2008 (2008-05-01), pages 158-168, XP009177092, ISSN: 0029-5450
- G.D. DELCUL ET AL.: 'Advanced head end for the treatment of used LWR fuel. OECD Nuclear Energy Agency.' 11TH INFORMATION EXCHANGE MEETING ON ACTINIDE AND FISSION PRODUCT PARTITIONING AND TRANSMUTATION. 01 November 2010, SAN FRANCISCO, CALIFORNIA, page 2, XP055109017 Retrieved from the Internet: <URL:http://www.oecd-nea.org/pt/iempt11/doc uments/IV-6_ OECDNov2011 FR.pdf>
- T.R. THOMAS.: 'AIROX Nuclear Fuel Recycling and Waste Management.' GLOBAL 93 12 September 1993, SEATTLE, WASHINGTON US, pages 722 - 728, XP008168709 Retrieved from the Internet: <URL:http://www.osti.gov/energycitations/se rvlets/purl/10163654- 6kPW7W/10163654.pdf>
- B.R.WESTPHAL ET AL.: 'Effect of Process Variables During the Head-End Treatment of Spent Oxide Fuel.' IDAHO NATIONAL LABORATORY. INL/CON-06-11605 2006, XP055109038 Retrieved from the Internet: <URL:http: www.inl.gov/technicalpublications/Documents /3867729.pdi>

## Description

The following disclosure generally relates to methods of recycling irradiated (spent) nuclear fuel (SNF) aimed at the isolation and trapping of beta-active radionuclide tritium prior to dissolving the SNF (at the head-end stages of the treatment of irradiated fuel), and can be used in nuclear power industry in reprocessing the SNF of nuclear reactors.

Currently, aqueous extraction is the most widespread method of recycling SNF. However, failure to purposefully remove tritium at the initial stage of recycling SNF, prior to its dissolution, leads to spreading tritium practically into all of the aqueous technological products of the process and thus complicates recycling liquid radioactive waste (LRW) to a great extent resulting in the increase of the volume of LRW.

Known in the art are methods of the preliminary (prior to dissolving SNF) removal of gaseous and volatile fission products at the outset of SNF recycling, at the stage of the exposure and voloxidation, which is performed through oxidating treatment of fuel in the stream of oxygen or air at high temperatures (see Radiochemical treatment of nuclear fuel from NPP - M.: Energoatomizdat, 1983, p.185), or by inert gas (helium) or hydrogen blowdown at 1500°C or less (Trans. Amer. Nucl. Soc. 1981, vol. 39, p.419-421; Radiochimica, 1981, vol. 29, Nº1, p. 153-157).

The required level of tritium removal (99% or more) in the helium or hydrogen blow-down of the reactor containing fragmented fuel elements is obtained over a long heating (during 24 hours) of a reaction mixture at 1000°C or more. This creates additional problems relating to making the reactor, and handling fission products as their compounds (comprising cesium, silver, ruthenium, iodine, technetium, antimony, etc.) start to evaporate at high temperature and condense in various parts of equipment. This, in its turn, necessitates performing repeatable liquid decontamination of the equipment which results in the formation of additional hot LRW. Also resulting from such a high temperature treatment, is an increase up to 1.5% in the amount of nitric-acid-insoluble plutonium.

On oxidating treatment of SNF based on uranium dioxide, a number of phase transitions of uranium oxides, when heated, occurs :

UO₂→UO₂₊ₓ→U₄O₉→U₃O₇→U₃O₈.

Since different oxides have different types of crystal lattice, added with mechanical effect on fuel composition it causes the destruction of fuel pellets to fine state (1-10 µ), and provides favorable conditions for releasing volatile and gaseous fission products (A.T. Agheyenkov, S.E. Bibikov, E.M. Valuyev et al. // Atomic energy, 1973, vol. 35, No. 5, pp. 323-325).

Also known is a method of thermal (high temperature) oxidating treatment of SNF fragments at 480-600°C in the presence of air or oxygen, the amount of tritium removed from the SNF being 99% (G.D. DelCul, et al., "Advanced head end for the treatment of used LWR fuel." OECD Nuclear Energy Agency, 11th Information Exchange Meeting on Actinide and Fission Product Partitioning and Transmutation, Hyatt at Fisherman's Wharf, San Francisco, California, 1-5 November 2010).

By its essence and the effect attained thereby, this method is most closely related to that described herein and is for that reason chosen as a prototype. The prototype's disadvantage lies in an inadequate extent of tritium stripping from the SNF and in rather high degree of cesium sublimation and further carrying it over that poses additional problems associated with decontaminating and redistributing hot fission products throughout the stages of SNF recycling.

Therefore, the need exists to increase the extent of the removal of tritium from the fuel composition and decrease the extent of the sublimation of cesium compounds using air with the addition of carbon dioxide and water vapors.

This object is achieved by providing a process of SNF recycling comprising breaking uranium dioxide fuel elements into fragments constituting reaction mass and subsequent two-phase thermal processing the reaction mass performed in an oxidizing atmosphere. The first phase is carried out at 400-650°C during 60-360 minutes in the stream of air medium additionally comprising carbon dioxide (1-4 vol.%). The second phase is carried out at 350-450° C during 30-120 minutes in the stream of air or oxygen-enriched medium that comprises water vapor in the amount, corresponding to a dew point of the gas-vapor mixture at 30-40°C. In addition, both phases are carried out with the continuous or periodic mechanical activation of the reaction mass. The rate of a gas flow at each phase corresponds to 10-50 full replacements per hour of the reaction chamber gas volume. In order to decrease the whole time of recycling and achieve the required extent of the voloxidation of the SNF level, before being introduced into the reaction chamber, the gas is heated up to a temperature of the chamber interior, i.e., up to 400-650°C at the first phase and up to 350-450°C at the second phase, respectively.

Technical result consists in achieving the level of tritium stripping of no less than 99.9%, and decreasing the carryover of cesium by voloxidation gaseous products.

An example of implementing the method.

Irradiated fuel voloxidation modes were tested on fuel element fragments of 32 mm in length (VVER-1000 SFA from Balakovskaya NPP, uranium burn up - 53 GWD/t after cooling over 14 years). A voloxidation level (a mass of broken-up fuel) was determined by a weight method. Tritium was tested using SKS-07P-B11 liquid-scintillation equipment.

In order to compare the prototype method and the claimed method, two tests were carried out for the same voloxidation period of 390 min. In the first test (according to the prototype), fragments of the fuel elements were voloxidized at an air atmosphere at 550 ± 50 °C, while the sample holder was shaken at a rate of 60 min⁻¹. In the second test, thermal processing SNF according to the claimed method was conducted in two phases. The first phase was carried out at a temperature of 550 ± 50 °C for 300 minutes in air additionally containing carbon dioxide in the amount of 1-4 vol.%, the mixture of air and carbon dioxide being preheated up to 550 ± 50 °C. The second phase was conducted at a temperature of 350-450 °C during 90 minutes in an oxygen-rich medium containing water vapor in the amount corresponding to a dew point of the gas-vapor mixture at 30-40 °C. At the latter phase, before having been introduced into the reaction chamber, the gas-vapor mixture was preheated up to 350-450 °C. The rate of the gas flow at each phase was set at about 30 full replacements per hour of the reaction chamber gas volume.

The degree of voloxidation of the fuel composition in both tests was 99%. In test # 2, the degree of tritium removal from irradiated fuel and of carryover of cesium were 99.97% and less than 0.1%, respectively. In test # 1, these values were 98% and 1.5%, respectively.

## Claims

1. A method of volumetric oxidative treatment of spent nuclear fuel (SNF) of uranium dioxide, the method comprising thermal processing a reaction mass of SNF element fragments in oxidative environment **characterized in that** said thermal processing is carried out in a reaction chamber in two phases, the first phase being performed at 400-650°C for 60-360 minutes in a gas stream of air additionally comprising carbon dioxide in an amount of 1-4 volume %, the second phase being performed at 350-450°C for 30-120 minutes in a gas stream of air or oxygen enriched medium that includes water steam in an amount corresponding to the dew point of gas-vapor mixture at 30-40°C, both phases being performed with continuous or periodic mechanical activation of the reaction mass.

2. The method according to claim 1 **characterized in that** the hourly rate of the gas stream at each of the phases is set at 10-50 full replacements of the reaction chamber volume.

3. The method according to claim 1 **characterized in that** before entering the reaction chamber the gas stream is preheated up to the internal temperature of the chamber at the respective phase.

## Patentansprüche

1. Verfahren zur volumetrischen oxidativen Behandlung von abgebrannten Brennelementen (SNF; spent nuclear fuel) aus Urandioxid, wobei das Verfahren eine thermische Behandlung einer Reaktionsmasse von SNF-Elementfragmenten in einer oxidativen Umgebung umfasst, **dadurch gekennzeichnet, dass** die thermische Behandlung in einer Reaktionskammer in zwei Phasen ausgeführt wird, wobei die erste Phase bei 400 - 650 °C über 30 - 360 Minuten in einem Luftgasstrom stattfindet, der zusätzlich Kohlendioxid in einer Menge von 1 - 4 Vol.-% enthält, die zweite Phase bei 350 - 450 °C über 30 - 120 Minuten in einem Luftgasstrom oder einem mit Sauerstoff angereicherten Medium stattfindet, der bzw. das Wasserdampf in einer Menge enthält, die dem Taupunkt der Gas-Dampf-Mischung bei 30 - 40 °C entspricht, und beide Phasen bei einer kontinuierlichen oder periodischen mechanischen Aktivierung der Reaktionsmasse stattfinden.

2. Verfahren nach Anspruch 1, **dadurch gekennzeichnet, dass** der Gasfluss pro Stunde in jeder der beiden Phasen auf ein 10- - 50-maliges vollständiges Austauschen des Reaktionskammervolumens eingestellt ist.

3. Verfahren nach Anspruch 1, **dadurch gekennzeichnet, dass** der Gasstrom vor einem Eintritt in die Reaktionskammer auf die bei der jeweiligen Phase in der Kammer herrschende Temperatur vorgeheizt wird.

## Revendications

1. Procédé de traitement oxydant volumétrique d'un combustible nucléaire irradié (SNF) de dioxyde d'uranium, le procédé comprenant le traitement thermique d'une masse de réaction de fragments d'éléments SNF dans un environnement oxydant **caractérisé en ce que** ledit traitement thermique est réalisé dans une chambre de réaction en deux phases, la première phase étant effectuée à une température allant de 400 à 650°C pendant 60 à 360 minutes dans un courant gazeux d'air comprenant en plus du dioxyde de carbone en une quantité allant de 1 à 4% en volume, la deuxième phase étant effectuée à une température allant de 350 à 450°C pendant 30 à 120 minutes dans un courant gazeux d'air ou dans un milieu enrichi en oxygène qui comporte de la vapeur d'eau en une quantité correspondant au point de rosée du mélange gaz-vapeur à une température allant de 30 à 40°C, les deux phases étant effectuées avec une activation mécanique continue ou périodique de la masse de réaction.

2. Procédé selon la revendication 1, **caractérisé en ce que** le taux horaire du courant gazeux à chacune des phases est fixé entre 10 et 50 remplacements complets du volume de chambre de réaction.

3. Procédé selon la revendication 1, **caractérisé en ce qu'**avant d'entrer dans la chambre de réaction, le courant gazeux est préchauffé jusqu'à la température interne de la chambre à la phase respective.
